# EUROPEAN PATENT APPLICATION

(11) **EP 1 808 211 A2**
(43) Date of publication of application: **18.07.2007**
(21) Application number: 06256358.0
(22) Date of filing: 14.12.2006
(51) Int. Cl.: A63F 13/10

(54) **Program, storage medium on which program is recorded, and game device**

(30) Priority: 14.12.2005 JP 2005359867
(71) Applicant: Kabushiki Kaisha Sega doing business as Sega Corporation, Tokyo 144-8531 (JP)
(72) Inventor: Shindo, Takafumi, c/o Kabushiki Kaisha Sega, Tokyo 144-8531 (JP); Murayama, Kenji, c/o Kabushiki Kaisha Sega, Tokyo 144-8531 (JP)
(74) Representative: Brown, Kenneth Richard

(57) **Abstract**

The present invention provides a program (image processing technique) by which it is possible to increase options of ball manipulation types for ball movements (kicks) in a ball game and create very realistic game play.

In a game device for executing a ball game in which by displaying an image of one's own character, a plurality of teammate characters, and a plurality of opponent characters moving in a game space a ball is put into a goal, when one's own character is in possession of the ball, a determination (S2) is made as to whether or not a kick command button of a controller operated by a player is being pressed, and when the kick command button is being pushed, a determination is made of a kicking strength of the ball according to a determination (S12) as to whether or not a pressure sensitivity of an input portion is not less than a prescribed value, and a height of the ball is determined according to a determination as to whether or not a length of pressing is not less than a prescribed value.

## Description

### BACKGROUND

The present invention relates to programs, storage media on which programs are recorded, and game devices, and particularly relates to programs (image processing techniques, image processing method) and the like for causing a ball to move to a predetermined position in a gaming device.

In addition to a type of game in which one's own character operated by a player (game player) fights on a one-against-one basis against an enemy character controlled by a computer, games that make use of image processing include a type of game in which one's own character fights as one character of his own team against an opponent team on a many-against-many basis. An example corresponding to this would be team sports ball games such as soccer and basketball.

For example, Japanese patent application JP 2000-20749A discloses a display control method relating to a baseball game in which points are earned by the player on an offensive side operating a hitter character so that a ball thrown by a pitcher character operated by a defensive side player hits a bat, and in this display control method, a parameter of ball speed is determined in response to a length of time a button is pushed and in response to this a parameter of a rate of change is determined.

In games that use balls such as baseball and soccer, there are many combinations of ball trajectory and speed and it is essential in competing against an opponent team to work out strategy by making use of these, which is one of the real thrills of the game.

For example, when using an analog button to control the ball in shooting in a soccer game, if the game player presses the button strongly, the ball in the virtual space (the game space) is shot far and high, that is, it is a "fast, high shot."

However, to imagine a game that plays out more realistically and to reflect that using an image processing technique or the like, it is essential to increase the types of ball manipulation selectable by the game player and to make that selection operation easy.

### SUMMARY

An object of the present invention is to provide an image processing technique by which it is possible to increase the choices of types of ball manipulation for ball movements (kicks) in a ball game and create very realistic game play.

Furthermore, an object of the present invention is to achieve convenience in operation by the player for ball movements in a ball game and provide an image processing technique or the like to support this with rapid operation.

Furthermore, an object of the present invention is to provide an image processing technique or the like by which it is possible to create very realistic game play by appropriately setting a movement trajectory (particularly displacement thereof) of the ball in the ball game.

Accordingly, (1) a program(program product) of the present invention includes a program for executing on a computer a process of a ball game in which a ball possessed by a character in a virtual space is sent out based on an operation signal from operation means for operating by an operator moving an operation device, the program causing the computer to execute: a process of determining whether or not the character is in possession of the ball; a process of determining whether or not an operation signal is received from the operation means indicating for the ball in possession to be released when the character is in possession of the ball; a process of measuring a time in which the operation signal is being received; a process of detecting pressure that is applied to the operation means by movement of the operation device and that continuously changes; and a process of setting a course on which the ball sent out by the character in the virtual space is to move according to a determination of whether or not the aforementioned time is not less than a specified value and a determination of whether or not the pressure is not less than a specified value.

When an operation device is being moved in this manner (for example, a kick command button is being pressed), a course (type of ball manipulation) by which the ball to be kicked is to move is set by a pressure (pressure sensitivity), which is applied by the operation means due to movement of the operation device and that changes continuously, and a time during which the operation signal is received (for example, a length of pressing), and therefore many options of types of ball manipulation are provided and a realistic game can be carried out. Furthermore, by handling the selection of the type of ball manipulation with a single input operation, it is possible to achieve convenience in operation by the player.

Furthermore, on the computer it is possible to detect a largest value of pressure in a prescribed period in which the operation signal is received and according to a determination of whether or not the largest value of pressure is not less than a specified value, a process can be executed of setting a course on which the ball sent out by the character in the virtual space is to move.

Furthermore, on the computer, a largest value of pressure is identified in a period from a pressure sensitivity check commence time, which is a fixed period after commencement of reception of the operation signal, until a pressure sensitivity check completion time after a predetermined period, and a process can be executed of setting a course on which the ball sent out by the character in the virtual space is to move according to a determination of whether or not the largest value of pressure is not less than a specified value.

By providing such a pressure sensitivity check time, it is possible to exclude the pressure sensitivity immediately after commencement of pressing, which tends to be very strong pressure sensitivity, thereby improving operability.

Furthermore, on the computer, a process can be executed in which a strength of force level, by which the ball in the virtual space is to be sent out, is determined according to a determination of whether or not the pressure is not less than a specified value, and a height level of a height of the ball in respect of a reference plane in the virtual space is determined according to a determination of whether or not the aforementioned time is not less than a specified value.

With such a process it becomes possible to select for example a soft low ball, a soft high ball, a strong low ball, and a strong high ball, which enables a more realistic game to be carried out.

Furthermore, (2) a program of the present invention includes a program for executing on a computer a process of a ball game in which a ball possessed by a character in a virtual space is sent out based on an operation signal from operation means for operating by an operator moving an operation device, the program causing the computer to execute: a process of determining whether or not the character is in possession of the ball; a process of determining whether or not an operation signal is received from the operation means indicating for the ball in possession to be released when the character is in possession of the ball; a process of determining whether or not an operation signal is received from the operation means indicating a lateral direction using as a reference a direction of straight advance from a position at which the ball has been sent out; a process of measuring a time in which the operation signal is being received; a process of detecting pressure that is applied to the operation means by movement of the operation device and that continuously changes; and a process of setting a course on which the ball sent out by the character in the virtual space is to move according to a determination of whether or not the aforementioned time is not less than a specified value, a determination of whether or not the pressure is not less than a specified value, and a direction that is indicated.

By adding an "operation signal indicating lateral direction" when setting the type of ball manipulation of the ball to be kicked (i.e target position of the ball to be kicked) in this manner, the options of types of ball manipulation are further increased, and a realistic game can be carried out.

Furthermore, on the computer, a process can be executed in which a strength of force level, by which the ball in the virtual space is to be sent out, is determined according to a determination of whether or not the pressure is not less than a specified value, a height level of a target position to which the ball in the virtual space is to reach is determined according to a determination of whether or not the aforementioned time is not less than a specified value, and a displacement in the course for the ball to move on or the target position to be reached by the ball is set in response to the strength of force level by which the ball is to be sent out or the height level of a target position for the ball.

Furthermore, on the computer, a process can be executed of setting a displacement in the ball's course to move on or the target position in response to a parameter that establishes a characteristic or state of the character or a position of an opponent character in the virtual space.

By providing displacement in the target position in this manner, a realistic game can be carried out.

Furthermore, (3) a storage medium of the present invention includes a storage medium on which program is recorded.

Furthermore, (4) a game device of the present invention includes a game device comprising a memory on which a game program is stored, operation means operated by a game player, and image processing means for executing the game program, which is recorded on the memory, based on an operation signal from the operation means, wherein the control means executes the program.

With the present invention, it is possible to provide an image processing technique (display control technique, data processing technique, program) or the like that enables more realistic game play to be created.

Furthermore, with the present invention it is possible to achieve convenience in operation by the player and provide a display control technique or the like to support this with rapid operation.

### DESCRIPTION OF DRAWINGS

FIG. 1 is a block diagram of a game device that can carry out a display control technique according to an embodiment of the present invention;
FIG. 2 is a flowchart showing an image processing technique (program) according to the present embodiment;
FIG. 3 is a schematic drawing of an ordinary controller connected to a game device;
FIG. 4 illustrates a gauge of the present embodiment;
FIG. 5 is a graph relating to pressure sensitivity of the main factors in determining the type of ball manipulation;
FIG. 6 shows a relationship between the gauge and pressure sensitivity;
FIG. 7 is a graph relating to the gauge among the main factors in determining the type of ball manipulation;
FIG. 8 shows a relationship between gauge length and kicking motion;
FIG. 9 illustrates a relationship between a height of the gauge and a ball target point;
FIG. 10 is a graph showing specific positions of each target point (target position);
FIG. 11 is a graph relating to the direction keys of the main factors in determining the type of ball manipulation;
FIG. 12 illustrates a relationship between camera direction and virtual space;
FIG. 13 illustrates target points that have been set in a central area of the goal;
FIG. 14 is a graph showing specific positions of target points that have been set in a central area of the goal;
FIG. 15 is a top view illustrating a relationship between the position of the goalkeeper and displacement of the ball;
FIG. 16 is a flowchart showing a course selection process when the goalkeeper is present within the fixed area;
FIG. 17 is a top view showing a search area (fixed area);
FIG. 18 is a top view illustrating a relationship between the distance from the goal G and the kickable area;
FIG. 19 includes top views showing a relationship between shooting accuracy and angle distribution;
FIG. 20 illustrates a relationship between kicking angles and target points;
FIG. 21 illustrates a relationship between the goal and an angle of inadvertency;
FIG. 22 is a graph showing a relationship between inadvertency and height for soft shots;
FIG. 23 is a graph showing a relationship between inadvertency and height for strong shots; and
FIG. 24 is a flowchart showing a shot processing flow.

### DETAILED DESCRIPTION

Hereinafter, embodiments of the present invention are described in detail with reference to the accompanying drawings. It should be noted that items having same functions are given same or related symbols and repetitive description thereof is omitted.

When using a game device (electronic amusement device) to play a team sports ball game such as a soccer game for example, one character in one's own team in the virtual space (a game space, stadium, field) is set as one's own character playing against an opponent team on a many-against-many basis. In this type of game, when the opponent team possesses the ball, one's own team including one's own character attempts to recapture the ball from the enemy characters and to shoot the ball at the goal of the opponent team while making use of passing and dribbling so as to score a goal (point). It should be noted that "one's own character" refers to a character operated by the player and capable of acting in response to operation means.

### Structure of Game Device

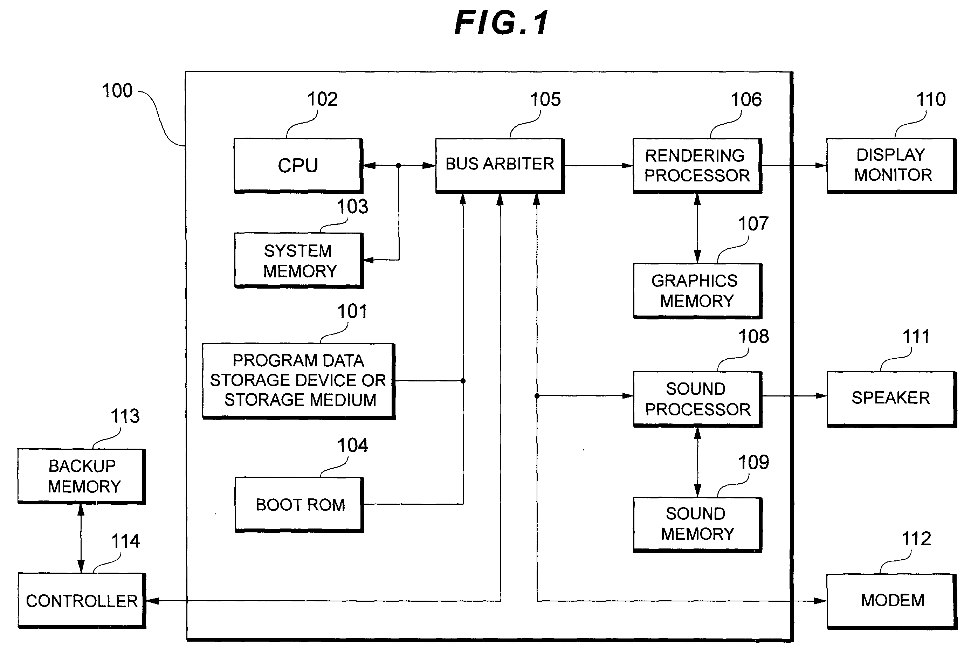

First, a structure of the game device is described. FIG. 1 is a block diagram of a game device that can carry out a display control technique according to an embodiment of the present invention. A game device 100 is provided with a program data storage device or storage medium (including for example an optical disk and optical disk drive) 101 in which the game program and data (including images and music data) are stored, a CPU 102 for carrying out such tasks as execution of the game program, overall control of the system, and coordinate calculations for image display, a system memory 103, a boot ROM 104 for storing programs and data necessary for the CPU 102 to carry out processing, and a bus arbiter 105 for controlling the flow of programs and data between the various blocks of the game device 100 and externally connected devices, with these [components] being connected respectively on a bus.

A rendering processor 106 is connected to the bus and video (movie) data read out from the program data storage device or storage medium 101 and images to be generated in response to operation by the game player or progress of the game are displayed on a display monitor (display means) 110 by the rendering processor 106. Graphics data and the like necessary for the rendering processor 106 to perform image generation are stored in a graphics memory (frame buffer) 107.

A sound processor 108 is connected to the bus and music data read out from the program data storage device or storage medium 101 and sound effects and voices to be generated in response to operation by the game player or progress of the game are output from a speaker 111 by the sound processor 108. Sound data and the like necessary for the sound processor 108 to generate sound effects and voice are stored in a sound memory 109.

A modem 112 (there is no limitation to a modem and this may be a network adaptor or the like as long as it is connectable to a network) is connected to the game device 100 and the game device 100 can communicate with other game devices 100 and a network server through the modem 112 and a telecommunications line (not shown in drawings). Moreover, connected to the game device 100 are a backup memory 113 (including a disk storage medium and storage device) in which information concerning the game at a midway process and program data inputted and outputted via the modem 112 are stored, and a controller 114 that inputs into the game device 100 information for controlling the game device 100 and externally connected devices in accordance with operation by the game player (operator). It should be noted that although the backup memory 113 is connected to the game controller 114, it may be connected to the game device main unit or built into the game device main unit.

The CPU 102 in the game device 100 processes data for electronic amusement based on operation signals (operation data) from an operation terminal as operation means enabling operation by the game player and a game program and is constructed provided with a function as a data processing device for executing a process in which a result of this processing is outputted.

Accordingly, the image processing technique of the present embodiment is recorded as a game program on a storage medium such as a DVD, CD-ROM, or a game cassette for example, and the CPU 102 processes data based on this program and inputted operations (operation signals and operation data from the operation terminal) of the game player and outputs the processing result.

Furthermore, an image processing and computation process unit is constituted by the CPU 102 and the rendering processor 106. It should be noted that the units described here as structural portions of the game device 100 may be divided off to other game devices or servers. An electronic amusement system, that is, a game device according to the present invention, may be achieved by a game player side game device terminal and a server.

When power is turned on to start a game using this game device, an unshown boot program loader loads a boot program (initial program), which is stored on the boot ROM 104, and the CPU 102 executes the boot program. In accordance with the boot program, the CPU 102 loads into the system memory 103 all or necessary parts of an OS stored in the program data storage device 101 and runs the OS. Also, under the control of the OS, the CPU 102 loads into the graphics memory 107 drawing data and image data stored in the program data storage device 101 as required, and loads sound data that is stored in the program data storage device 101 into the sound memory 109.

Furthermore, under the control of the OS, the CPU 102 executes an application program that is stored in the system memory 103. Data resulting from the execution of the application program is written at that time into the system memory 103 and the backup memory 113 and referenced. The backup memory 113 stores data so that when a game has been interrupted or the like, the status up until that time can be held.

The rendering processor 106 reads out the drawing data necessary for the display of images stored in the graphics memory 107 and, based on commands and data from the CPU 102 resulting from execution of the application program, carries out various types of image processing and generates image data. The generated images are outputted to the display monitor 110.

The sound processor 108 reads out the sound data stored in the sound memory 109 and, based on commands and data from the CPU 102 resulting from execution of the application program, carries out various types of information processing. The sound data is outputted to the speaker 111.

The bus arbiter 105 carries out control between the various units connected via data transmission channels (buses and the like).

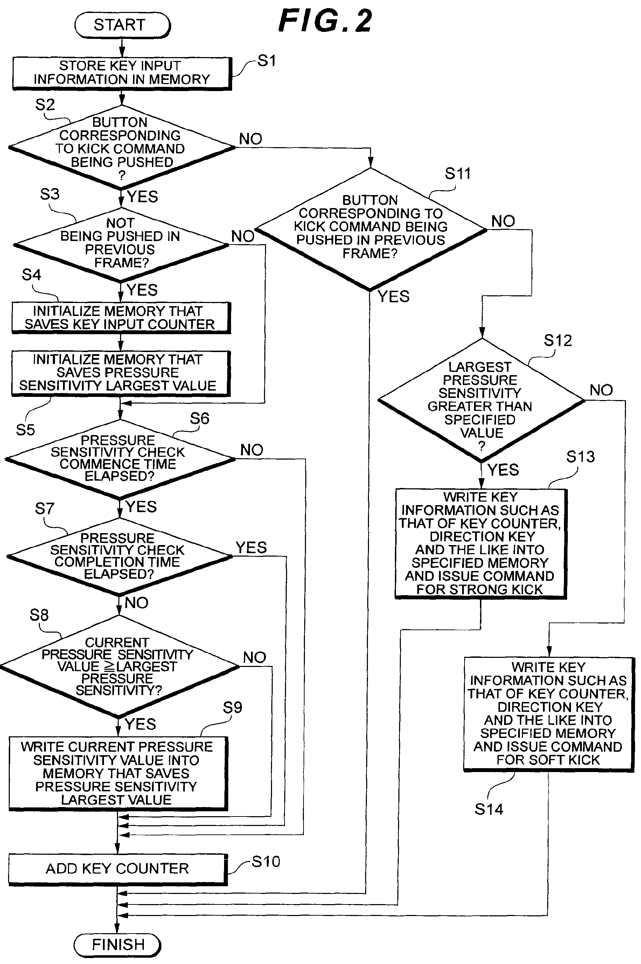

In the game device according to the present embodiment configured as described above, the CPU achieves predetermined processing by executing the program that is read from a program data storage medium (device) such as a DVD. Description of processing flow of FIG. 2

Hereinafter, description is given of specific processing of a game device according to the present embodiment. As mentioned above, the present embodiment relates to ball movements in a ball game such as soccer, for example, kicks (which includes passes and shots at goal) and provides various forms of ball manipulations (ball speed, ball trajectory, and path). Also, [the present embodiment] facilitates the convenience of the game player.

FIG. 2 is a flowchart showing an image processing technique (a ball control technique and display control technique) according to the present embodiment. For example, suppose one's own character has possession of the ball and is shooting at the opponent's goal.

First, the CPU 102 stores <step S1> key input information into a memory (the system memory 103 for example). Here "key input information" refers to the keys of the controller operated by the game player (player) and a list of commands, with for example a key A being allocated to a kick (sending out or releasing the ball) command and a key B being allocated to a dribble command.

The list is compared against the key currently being pushed and a determination is made <step S2> as to whether or not the key (button) corresponding to the kick command is being pushed. If the key corresponding to the kick command is being pushed, a determination is made <step S3> as to whether or not the key corresponding to the kick command is being pushed in the previous frame. Here, "frame" refers to a fixed period from the pressing of a key (movement of an operation device including operation of a joystick), for example, for televisions used in Japan (NTSC format), one frame is 1/60 second. However, for televisions used in Europe and elsewhere (PAL format), [one frame] is 1/50 second, and therefore the NTSC format and the PAL format may be set to be switchable when the user starts [the game].

Consequently, if the key corresponding to the kick command is not being pushed in the previous frame, or if this is the frame in which pushing has begun, a memory (a portion of the system memory 103 for example) that saves a key input counter is initialized <step S4> and a memory (a portion of the system memory 103 for example) that saves a pressure sensitivity largest value is initialized <step S5>. It should be noted that if the key corresponding to the kick command is being pushed in the previous frame, the procedure proceeds to step S6.

Following this, a determination is made <step S6> as to whether or not a pressure sensitivity check commence time has elapsed. During a fixed [number of] frames (for example, during three frames) from the commencement of pushing, variation in the strength of pressing (pressure sensitivity) is prone to occur and sometimes the pressing is not what the game player assumed, and therefore pressure sensitivity is measured shortly after the commencement of pushing, that is, a pressure, which is applied to an operation means and that continually changes, is detected. Following this, if the pressure sensitivity check commence time has elapsed, that is, if the current key counter value (frame value) is above the pressure sensitivity check commence time, then the procedure proceeds to step S7. It should be noted that the pressure sensitivity check commence time is stored as a fixed value in a program memory (the system memory 103 for example). And if the pressure sensitivity check commence time has not elapsed, the procedure proceeds to step S10.

Following this, a determination is made <step S7> as to whether or not a pressure sensitivity check completion time has elapsed, and if the pressure sensitivity check completion time has not elapsed, that is, if the current key counter value is lower than the pressure sensitivity check completion time value, then the procedure proceeds to step S8. That is, if this is within a pressure sensitivity check period, then the current pressure sensitivity value and the current largest pressure sensitivity from the start of the pressure sensitivity check commence time are compared <step S8> and if the current pressure sensitivity value is greater than the largest pressure sensitivity, the current pressure sensitivity value is written <step S9> to a memory (a portion of the system memory 103 for example) for saving the largest pressure sensitivity value. It should be noted that the pressure sensitivity check completion time is stored as a fixed value in a program memory (the system memory 103 for example). Furthermore, if the pressure sensitivity check completion time has elapsed, the procedure proceeds to step S10 and, moreover, if the current pressure sensitivity value is not greater than the largest pressure sensitivity, then the procedure proceeds to step S10. Following this, the key counter is added <step S10> and processing finishes.

If the key corresponding to the kick command is not being pushed at step S2, a determination is made <step S11> as to whether or not the key corresponding to the kick command is being pushed in the previous frame, and if the key corresponding to the kick command is being pushed, processing finishes.

Furthermore, if the key corresponding to the kick command is not being pushed, then a determination is made <step S12> as to whether or not the largest pressure sensitivity value is greater than a specified value, and if it is greater than the specified value, key information such as that of the key counter and direction key is written to a specified memory (the system memory 103 for example), and a command for a strong kick is issued <step S13> and processing finishes. If this less than the specified value, key information such as that of the key counter and direction key is written to a specified memory (the system memory 103 for example), and a command for a soft kick is issued <step S14> and processing finishes.

Thus, in the present embodiment, the strength of a kick can be selected by whether or not the largest pressure sensitivity value is greater than the specified value, and therefore by combining this with the key counter (frame number), direction key, and the like, the options for types of ball manipulation can be increased and more realistic game play can be created.

Furthermore, since the strength of a kick can be selected using the pressure (pressure sensitivity) of a single key, it is also possible to achieve greater convenience in operation by the player.

### Description of controller

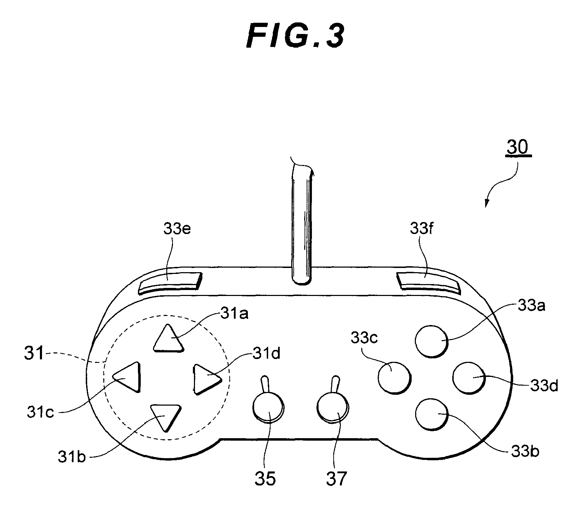

Here, description is given of the controller (operation means). FIG. 3 is a schematic drawing of an ordinary controller 30 connected to the game device. As shown in FIG. 3, a plurality of buttons (keys, operation devices) is provided on the controller. For example, movement directions of a character or the like can be indicated by operating direction keys 31 up and down (31 a and 31 b) or left and right (31c and 31d). This indication can also be carried out by using analog keys (joysticks) 35 and 37. Other buttons (33a to 33f) are assigned to operation indications such as kicks (passes, shots) and tackles for example. These operation indications can be varied as appropriate in response to game progress. That is, even for the same button, when in defense for example, it may be assigned to a tackle movement indication and when in offense (attacking), it may be assigned to a kick (including shooting and passing) movement indication.

In the movement processing for the character in the present embodiment, the button 33c is assigned to an operation indication known as "perform a kick," and the strength of a kick (a level of the strength of force by which the ball is dispatched) can be selected by regulating the pushing of this button. For example, by half-pressing [the button], the pressure sensitivity can be made small and a soft kick can be selected. And by a fully pressing [the button], the pressure sensitivity can be made larger and a strong kick can be selected for example.

### Description of ball type combinations

As described in steps S13 and S14 of FIG. 2, in addition to (1) pressure sensitivity, the main factors in determining ball type are (2) the key counter, and (3) the direction keys.

These are described here in detail and description is given concerning that there are many selectable types of ball manipulations.

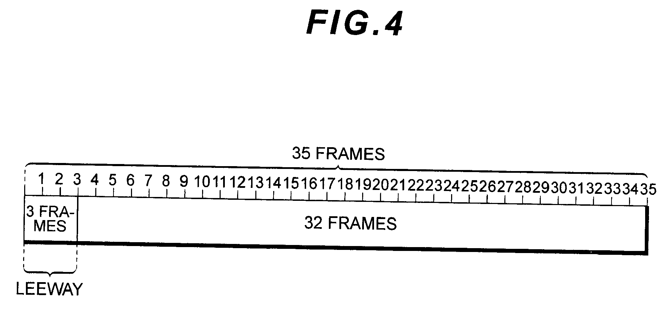

First, description is initially given concerning a relationship between the previously mentioned frames (key counter) and a gauge. FIG. 4 illustrates a gauge of the present embodiment. As shown in the drawing, the gauge is a bar graph displayed on an edge portion of the game screen and has a length of 35 frames for example. The gauge lengthens in response to the length of time of pushing from the commencement of pushing of a key and reaches a largest length of 35 frames. It should be noted that this may be set so that when the key is pushed in excess of the 35 frames, the gauge returns to the zero frame and again lengthens.

In the present embodiment, three frames from the commencement of pushing of the key are set as "leeway" and no determination is made therein of gauge length.

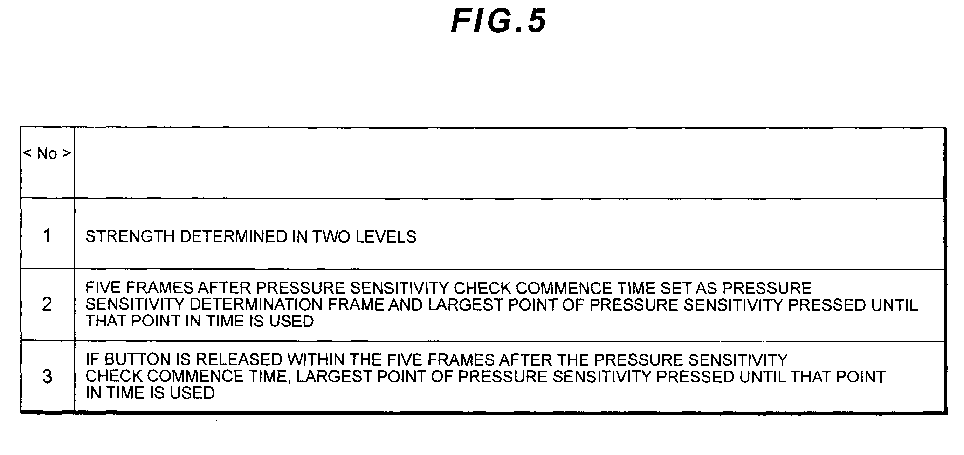

FIG. 5 is a graph relating to pressure sensitivity of the main factors in determining the type of ball manipulation. As shown in FIG. 5, in (No. 1) the strength of the pressure sensitivity of the button is determined in two levels and in (No. 2) a five frame period after the pressure sensitivity check commence time (for example, five frames after) is set as the pressure sensitivity determination frame and the largest point of pressure sensitivity pressed until that point in time is used. In (No. 3) however, if the button is released within the five frames after the pressure sensitivity check commence time, the largest point of pressure sensitivity pressed until that point in time is used.

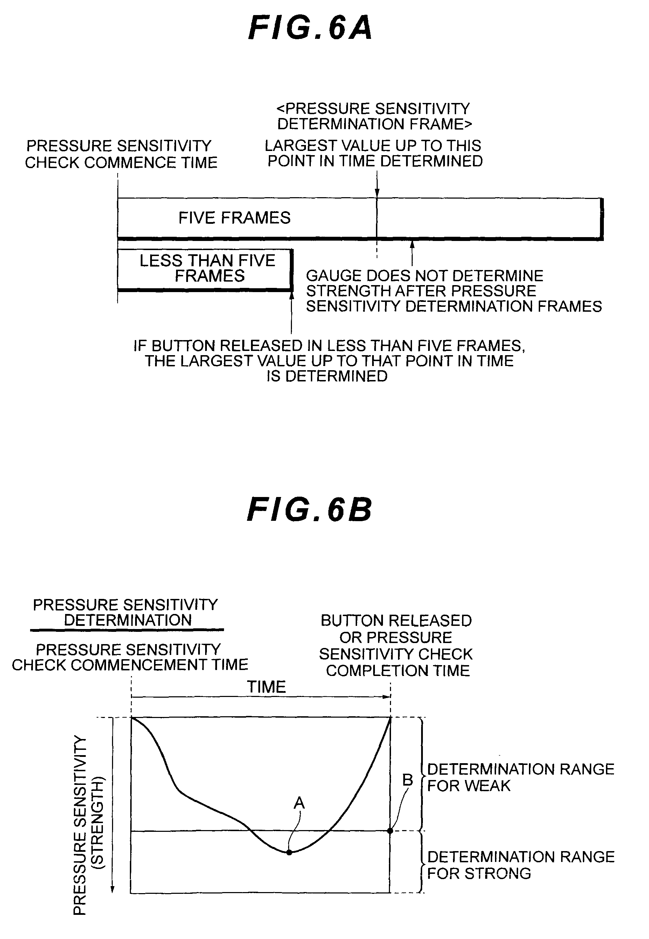

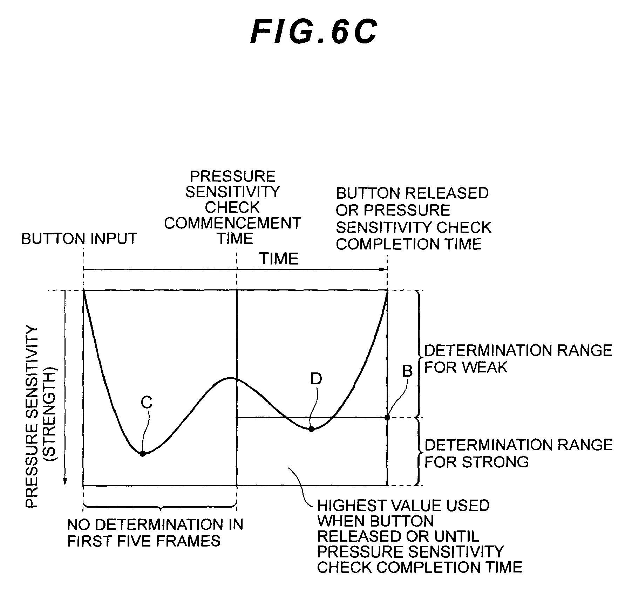

FIG. 6 illustrates relationships between the gauge and pressure sensitivity, with 6A indicating the gauge and 6B and 6C indicating pressure sensitivity. As shown on the top level of 6A, when the key (button) is pushed more than the five frames after the pressure sensitivity check commence time, a determination is made of the largest value during those five frames. And as shown on the bottom level of 6A, when the key (button) is released within the five frames after the pressure sensitivity check commence time, a determination is made of the largest value up to that point in time. The vertical axis indicates pressure sensitivity (strength) and the horizontal axis indicates time. It should be noted that no determination is made of pressure sensitivity after five frames from the pressure sensitivity check commence time.

Accordingly, when the pressure sensitivity varies as shown in 6B during [a period] from the pressure sensitivity check commence time until the pressure sensitivity check completion time (pressure sensitivity determination frame), the pressure sensitivity at a point A becomes the largest value. In this case, the determination of strength is made based on the magnitude to the pressure sensitivity at a point B, and therefore the pressure sensitivity is determined as "strong" by using this largest value. It should be noted that the above-described pressure sensitivity check commence time is set to five frames after the commencement of pushing of the key (button). That is, as shown in FIG. 6C, the five frame period from button input is not used in determining pressure sensitivity (point C is not considered), rather the pressure sensitivity at a point D is used to determine strength. Here, "strength" is determined. It should be noted that [the period] until the pressure sensitivity check commence time may be set to three frames in the same manner as the above-mentioned "leeway."

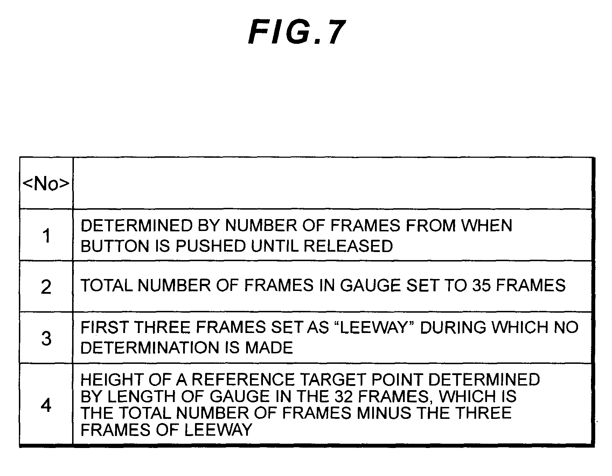

FIG. 7 is a graph relating to the gauge among the main factors in determining the type of ball manipulation. As shown in FIG. 7, in (No. 1) the gauge length is determined by the number of frames from the commencement of pushing of the key (button) until it is released. As mentioned above, in (No. 2) the total number of frames in the gauge in the present embodiment is 35 frames. Of course, the number of frames is not limited to this numerical value and it can be set as appropriate. However, in (No. 3) the first three frames are "leeway" and no determination is made during this period. In (No. 4), various determinations are made (for example, determinations of the kicking motion and the height of a reference target point) depending on the length of the gauge in the 32 frames, which is the total number of frames (35 frames) of the gauge minus the three frames of "leeway."

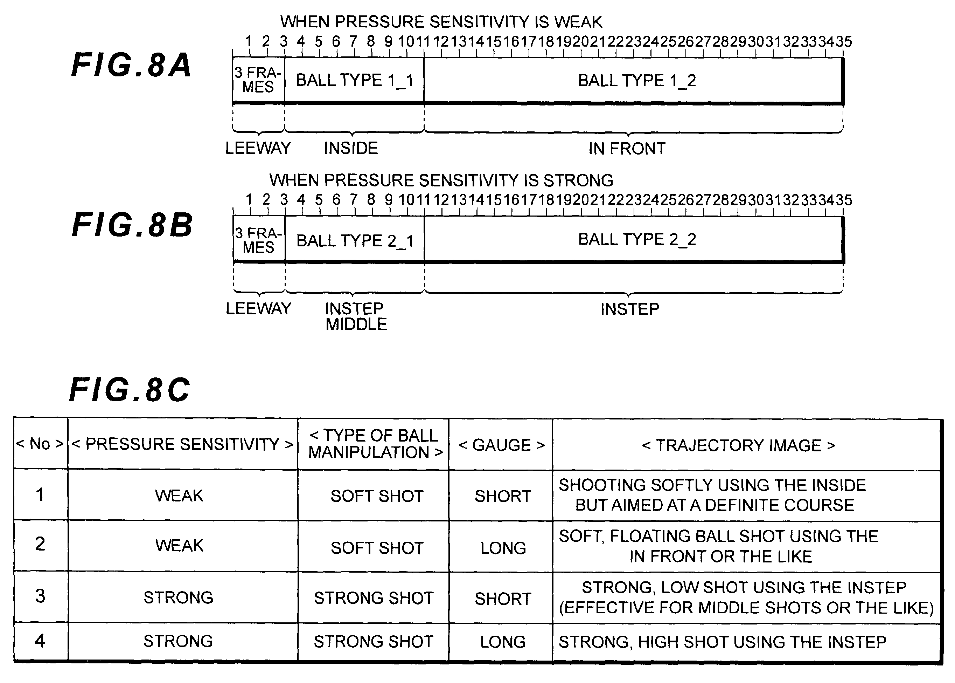

FIG. 8 includes graphs illustrating a relationship between gauge length (measurement value of a time in which an operation signal is received) and kicking motion, with 8A showing a case in which the pressure sensitivity is weak, 8B showing a case in which the pressure sensitivity is strong, and 8C integrally showing a combination of pressure sensitivity and gauge length.

As shown in FIG. 8A, when the pressure sensitivity is weak, during the first 1/4 of the 32 frames, which excludes the three frames of "leeway," that is, when the gauge length is 3 to 11 frames (when the gauge length is "short"), the shot (kick) is soft and low using a motion such as an "inside" for example. When the gauge length is from 11 to 35 frames, the shot is soft and high using a motion such as an "in front" for example. This shot is effective as a middle shot.

Here, "inside" refers to a shot kicking with the inside (inside area) of the foot, which is effective for short distances and when rolling the ball. "In front" refers to a shot kicking with the front of the inside area of the foot, which is effective when attempting to curve the ball such as when crossing from the side for example.

As shown in FIG. 8B, when the pressure sensitivity is strong, during the first 1/4 of the 32 frames, which excludes the three frames of "leeway," that is, when the gauge length is 3 to 11 frames (when the gauge length is "short"), the shoot (kick) is strong and low using a motion such as an "instep" for example. When the gauge length is from 11 to 35 frames, the shot is strong and high using a motion such as an "instep" for example.

Here, "instep" refers to a shot kicking with the instep of the foot (area where shoelaces sit), which is effective when it is desired to kick the ball hard and straight.

Thus, with the present embodiment, four types of shots are selectable using the strength of pressure sensitivity and the length of the gauge length. Furthermore, display of the motion when shooting can be achieved corresponding to the type of ball manipulation such that more realistic screen display can be achieved.

Here, in order to visually clarify the strength determination result, the color of the gauge may be varied according to the determination result, for example making the gauge red when "strong" is determined and making the gauge blue when "soft" is determined.

FIG. 8C integrally shows a combination of the above-mentioned pressure sensitivity and gauge length. Here, trajectory images for four types of ball manipulations are indicated. Namely, when the pressure sensitivity is weak and the gauge is short (a soft, low shot), there is an image of shooting softly using the inside or the like but which is aimed at a definite course, and when the pressure sensitivity is weak and the gauge is long (a soft, high shot), there is an image of shooting using the in front or the like, with a soft, floating ball shot or a curve aimed at a top corner of the goal. Furthermore, when the pressure sensitivity is strong and the gauge is short, there is an image of a strong, low shot using the instep or the like, which is a shot effective for middle shots or the like. And when the pressure sensitivity is strong and the gauge is long, there is an image of a strong, high shot using the instep or the like.

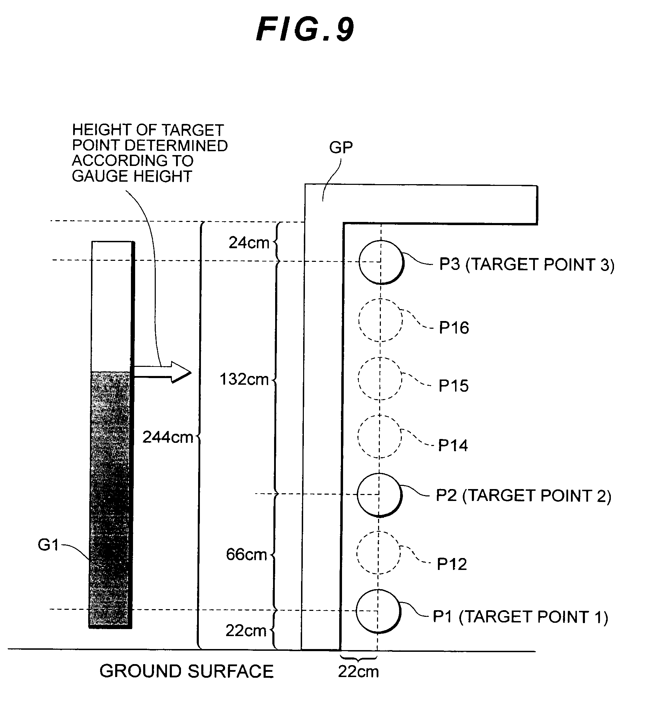

It should be noted that in FIG. 8, the height of the ball was indicated as "high" or "low" depending on the gauge length (for example, whether or not greater than 11 frames), but more specifically this may be set as a height corresponding to the gauge length (height) as shown in FIG. 9.

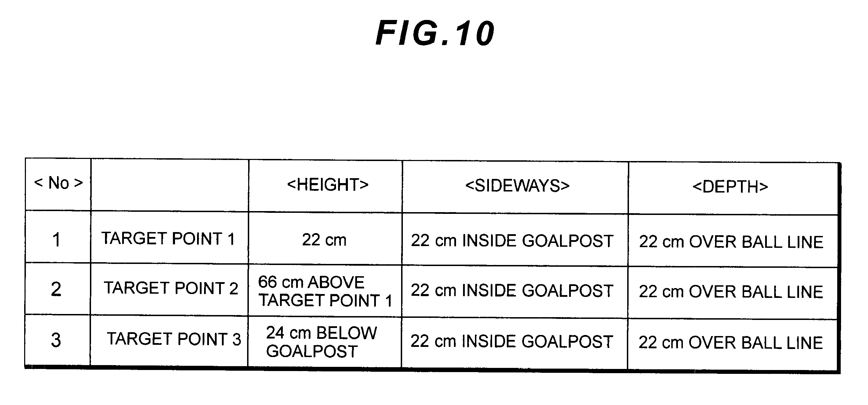

FIG. 9 illustrates a relationship between a height of a gauge G1 and a ball target point. FIG. 10 is a graph showing specific positions of each target point (target position). Here, the gauge is displayed vertically to facilitate description, but the gauge may be displayed horizontally as shown in FIG. 8 and of course may be displayed vertically. "GP" indicates goalpost.

As shown in FIG. 9, a position corresponding to the gauge height, for example a point P15 may be set as the target point (ball height and target height). Here, in addition to the point P15, points P1, P12, P2, P14, P16, and P3 are set, for example the point P1 (this is set as the target point 1) has a height of 22 cm from the ground and is positioned 22 cm to the side inside from the goalpost GP and 22 cm back from a ball line. Furthermore, the point P2 (this is set as the target point 2) has a height of 66 cm above the target point P1 and is positioned 22 cm to the side inside from the goalpost GP and 22 cm back from the ball line. Furthermore, the point P3 (this is set as the target point 3) has a height of 24 cm below the goalpost GP and is positioned 22 cm to the side inside from the goalpost GP and 22 cm back from the ball line (goal line) (see FIG. 10).

Target points such as these may be set in even proportions to the gauge length or may be set by setting high, mid, and low gauge heights for each of a fixed [number of] frames such that target points 1, 2, and 3 corresponding to these can be selected.

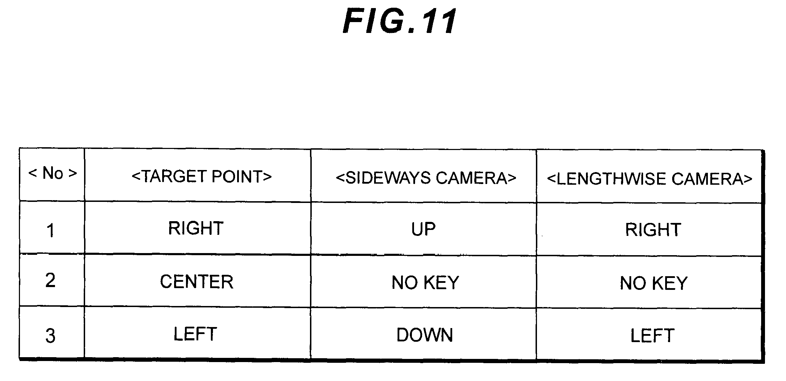

FIG. 11 is a graph relating to the direction keys of the main factors in determining the type of ball manipulation. As described in reference to FIG. 3, the direction keys 31 include up and down (31 a and 31 b) or left and right (31 c and 31 d) keys (buttons).

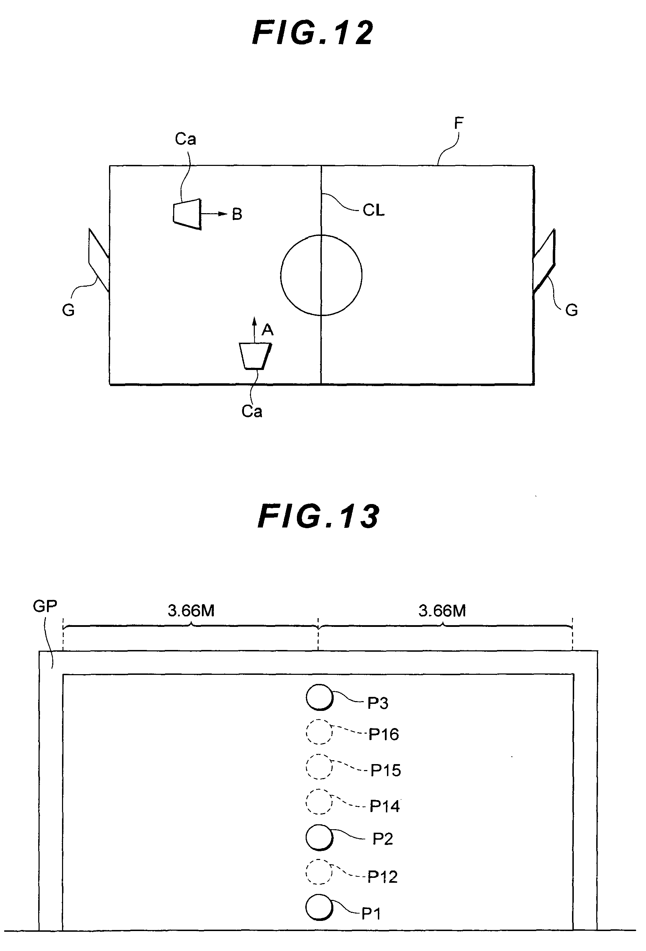

As shown in the "lengthwise camera" column in FIG. 11, by pressing the right direction key for example, the right side of the goal can be set as the target point (see No. 1). Similarly, by pressing the left direction key, the left side of the goal can be set as the target point (see No. 3). Accordingly, since the target points are set on the left side of the goal in FIG. 9, the left direction key is pushed. When a direction key is not pressed, the target point is set to a central area of the goal (see No. 2). It should be noted that "lengthwise camera" refers to a camera Ca of a direction B and "sideways camera" refers to a camera Ca of a direction A shown in FIG. 12. FIG. 12 illustrates a relationship between camera direction and virtual space. G indicates goal, F indicates the virtual space (field), and CL indicates a center line.

Consequently, in the case of the "sideways camera," by pressing the up direction key for example, the right side of the goal can be set as the target point. Similarly, by pressing the down direction key, the left side of the goal can be set as the target point. When a direction key is not pressed, the target point is set to a central area of the goal. It should be noted that description is given here concerning when the direction keys 31 of FIG. 3 are used, but up/down, left/right, and arbitrary positions can be specified by using the analog keys 35 and 37.

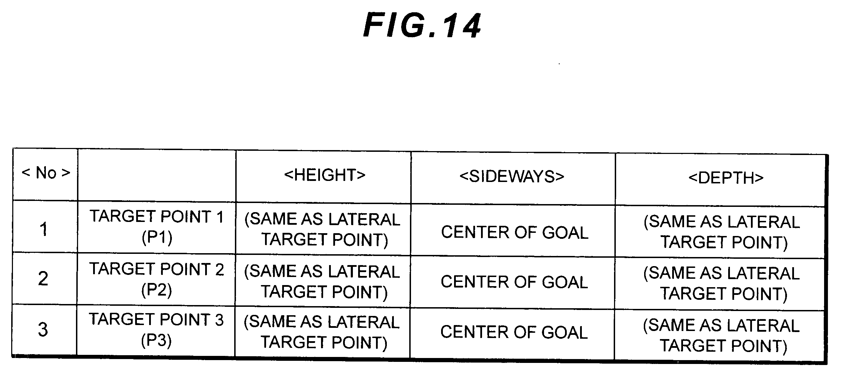

Furthermore, the target points of the left side of the goal are shown in FIG. 9, but target points can be set in the same manner for the right side also. And target points of the central area are set as shown in FIG. 13 and FIG. 14 for example. FIG. 13 illustrates target points that have been set in a central area of the goal and FIG. 14 is a graph showing specific positions of target points that have been set in a central area of the goal. In regard to the central area target points (P1, P12, P2, P14, P15, P16, and P3), the lateral direction positions thereof are positioned in a center of the goal but otherwise, that is, their height and depth, are the same as in FIG. 9, and therefore description is omitted.

It should be noted that specific numerical values are indicated in FIG. 9 and elsewhere but these correspond to a scale within the game space and do not indicate an actual distance on the screen. Furthermore, it is clearly evident that these numerical values can be varied as appropriate.

### Description of ball inadvertency

As described above, the types of ball manipulation can be set by (1) pressure sensitivity, (2) the key counter, and (3) direction keys, but by setting inadvertency (displacement, correction, and resetting of the target position) with respect to the position at which the game player is intending to send the ball, it is possible to construct more realistic game play.

Here, description is given of ball inadvertency. Ball inadvertency involves such factors as <1> position of the opponent character (in particular, the goalkeeper) and characteristics or state of one's own character and <2> lateral inadvertency and vertical inadvertency of the ball.

### <1-1> Description is given concerning a position of the opponent character (in particular, the goalkeeper).

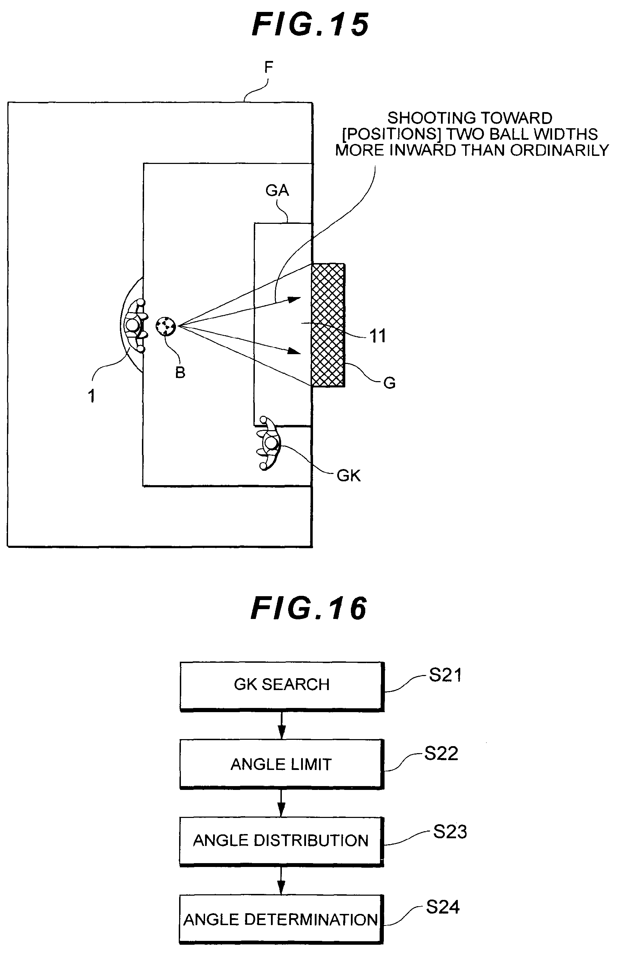

FIG. 15 is a top view illustrating a relationship between the position of the goalkeeper and displacement of the ball. Here, description is given concerning displacement of the target points when target points have been set on the right side or left side of the goal (see FIG. 9).

As shown in FIG. 15, when the opponent goalkeeper GK is not present within a triangle area 11 made by a ball B in possession of one's own character 1 and a goal G, the target points are shifted inward by two ball [widths] (see arrows in drawing). The setting involved here is carried out automatically by the CPU.

In contrast to this, when the target points are set in the central area of the goal G (see FIG. 13), the lateral position of the target points are varied as appropriate depending on whether or not the opponent goalkeeper GK is present within a fixed area as viewed from the ball.

When the goalkeeper GK is not present within the fixed area, the target points described in FIG. 13 are used.

When the goalkeeper GK is present within the fixed area, the target positions (direction of kicking) varies depending on the accuracy of the shooting (kicking) of one's own character. For example, this is set so that when one's own character is an athlete having high shooting accuracy, a course is selected that does not miss the goal while avoiding the goalkeeper GK, but when one's own character is an athlete having low shooting accuracy, a course is selected that goes to the goalkeeper.

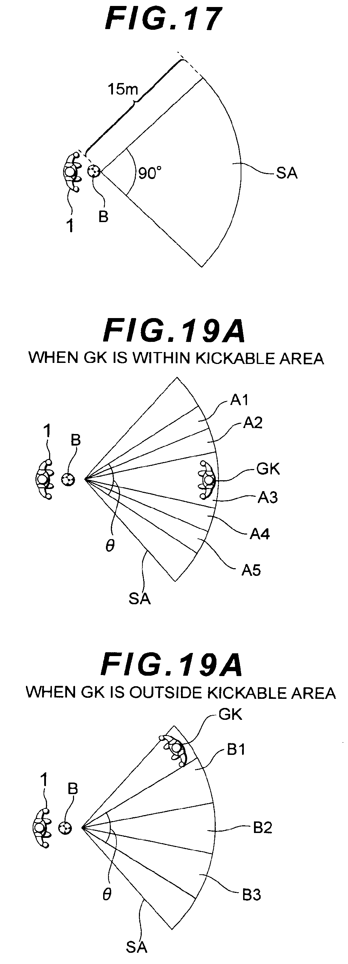

Detailed description is given below concerning such course selection. FIG. 16 is a flowchart showing a course selection process when the goalkeeper GK is present within the fixed area. As shown in FIG. 16, the CPU for example carries out a search (step S21) for the goalkeeper GK. If the goalkeeper GK is not present within the fixed area, the target points in the central area of the goal are used as described above. FIG. 17 is a top view showing a search area (fixed area), which is an area 45 degrees left and right from a line connecting the ball B possessed by one's own character 1 and a central portion Gc of the goal G, with a search area SA being an area of 15 m for example from the ball B.

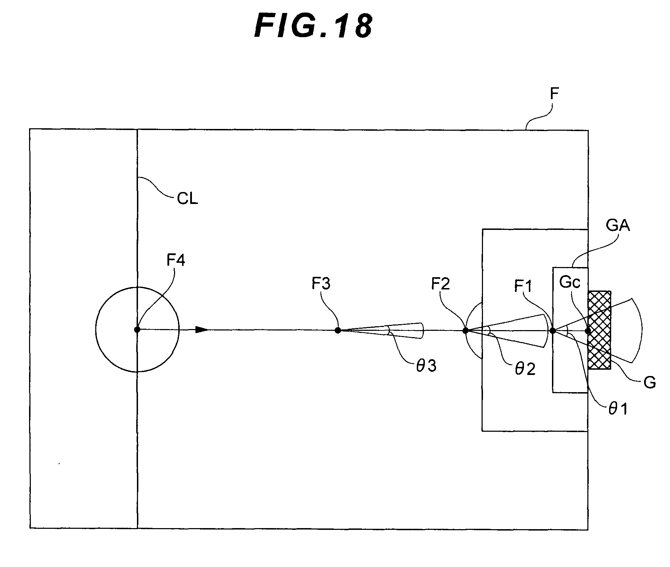

Following this, as shown in FIG. 16, a kickable angle is set (step S22) using a distance from the goal G. That is, an area is set in which the target positions can be varied. FIG. 18 is a top view illustrating a relationship between the distance from the goal G and the kickable area. As shown in FIG. 18, the kickable area (possible angle) becomes smaller as kicking positions become farther from the goal G from F1 to F4. The point F1 for example is a point (on the goal area) that is 5.5 m from the central portion Gc of the goal G and a kickable angle θ1 from this point is 30 degrees. The point F2 is a point (on the penalty arc) that is 20.15 m from the central portion Gc and a kickable angle θ2 from this point is 15 degrees. The point F3 is a point that is 27.5 m from the central portion Gc and a kickable angle θ3 from this point is 7 degrees. The point F4 is a point that is 55 m from the central portion Gc and a kickable angle θ4 from this point is almost zero degrees. It should be noted that strong shots may be set to be unkickable within the goal area GA.

Following this, as shown in FIG. 16, the kicking angle distribution is reset (step S23) using the shooting accuracy of the athlete and within the limited angle area that is set in this step, the final kicking angle is determined (step S24).

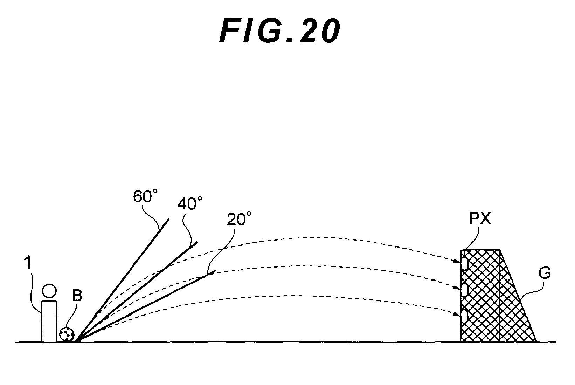

FIGS. 19A and 19B are top views showing a relationship between shooting accuracy and angle distribution, and here the kickable angle θ that was set in step S22 is subdivided within the search area SA and a plurality of angle areas (A1 to A5, B1 to B3) are set. As shown in FIG. 19A, when the shooting accuracy is low, an angle area A3 in which the goalkeeper GK is present is used, and when the shooting is medium, an angle area A2 and A4 is used, and when the shooting accuracy is high, an angle area A1 and A5 is used. Thus, in accordance with higher shooting accuracy, an angle area is set that avoids the goalkeeper GP. As shown in FIG. 19B, in a case where the goalkeeper GK is not present within the area of the kickable angle θ that is set at step S22, when the shooting accuracy is low, an angle area B1 closest to the goalkeeper GK is used, and when the shooting is medium, an angle area B2 is used, and when the shooting accuracy is high, an angle area B3 is used. Thus, in accordance with higher shooting accuracy, an angle area is set that avoids the goalkeeper GP. It should be noted that the subdivisions of the angle θ and the ranking number for shooting accuracy can be varied as appropriate, and the shooting accuracy may be set to change from higher to lower in proportion to greater directional distances away from the goalkeeper GP.

### <1-2> Description concerning characteristics and state of one's own character

Description was given above concerning course variation (ball displacement) based on such factors as the position of the opponent character, but here description is given of ball displacement based on various parameters (characteristics) of one's own character.

In addition to kicking accuracy described in <1-1>, various parameters of one's own character include kicking power and body orientation (angle to the goal). In response to these, the kicking angle and the initial velocity of the ball are varied and the trajectory of the ball is shifted.

Here, description is given concerning the kicking angle and the initial velocity of the ball.

In the case of the soft, high shot (in front) described with reference to FIG. 8, the kicking angle is changed from 20 degrees to 60 degrees in response to the gauge height. That is, of the 35 frames, the 13th frame corresponds to 20 degrees and the 35th frame corresponds to 60 degrees. FIG. 20 illustrates a relationship between kicking angles and target points. As shown in the drawing, target points PX become higher for greater kicking angles. The initial velocity of kicking ranges from 8 m/s to 20 m/s and is set according to distance to the target point. It should be noted that no consideration is given to kicking power or body orientation for the shooting here.

Next, in the case of the soft, low shot (inside) described with reference to FIG. 8, the initial velocity of kicking is set to 15 m/s with respect to the gauge height.

Here, the kicking angle is set (adjusted) in a range of 0.8 times to 1.2 times according to the parameter of the athlete's kicking power. That is, when one's own character is an athlete having weak kicking power, [the kicking angle] becomes 0.8 times and when one's own character is an athlete having strong kicking power, [the kicking angle] becomes 1.2 times. It should be noted that the initial velocity of kicking may be set in the range of 0.8 times to 1.2 times.

Furthermore, the kicking angle is set in the range of 1.0 times to 1.2 times according to the orientation of the body of one's own character (the angle with respect to the goal). For example, when the orientation (posture) of the body of one's own character to the goal is zero degrees, that is, when one's character is directly facing the goal, the kicking angle is set to 1.0 times and when the orientation of the body to the goal is 180 degrees, that is, when the character's back is to the goal, the kicking angle is set to 0.8 times. When the character's back is to the goal, the shot is taken while turning to face the goal, which reduces the kicking power and is therefore set less than one. It should be noted that the initial velocity of kicking may be set in the range of 1.0 times to 1.2 times.

Next, in the case of the strong shot (inside) described with reference to FIG. 8, the initial velocity of kicking is set to 33 m/s and the initial velocity of kicking is set in a range of 0.8 times to 1.2 times according to the parameter of the athlete's kicking power. Furthermore, according to the athlete's posture, when the orientation of the body to the goal is zero degrees, the initial velocity of kicking is set to 1.0 times and when the orientation of the body to the goal is 180 degrees, the initial velocity of kicking is set to 0.8 times.

It should be noted that here the ball trajectory was displaced by changing such factors as the angle and initial velocity of kicking, but the ball trajectory may be displaced by resetting the target points (see FIG. 9) laterally, vertically, and depthwise (deeper in or in front [of the goal]).

Furthermore, as described before, the kicking angle and the like may be reset using a state of one's own character, for example, a speed of movement.

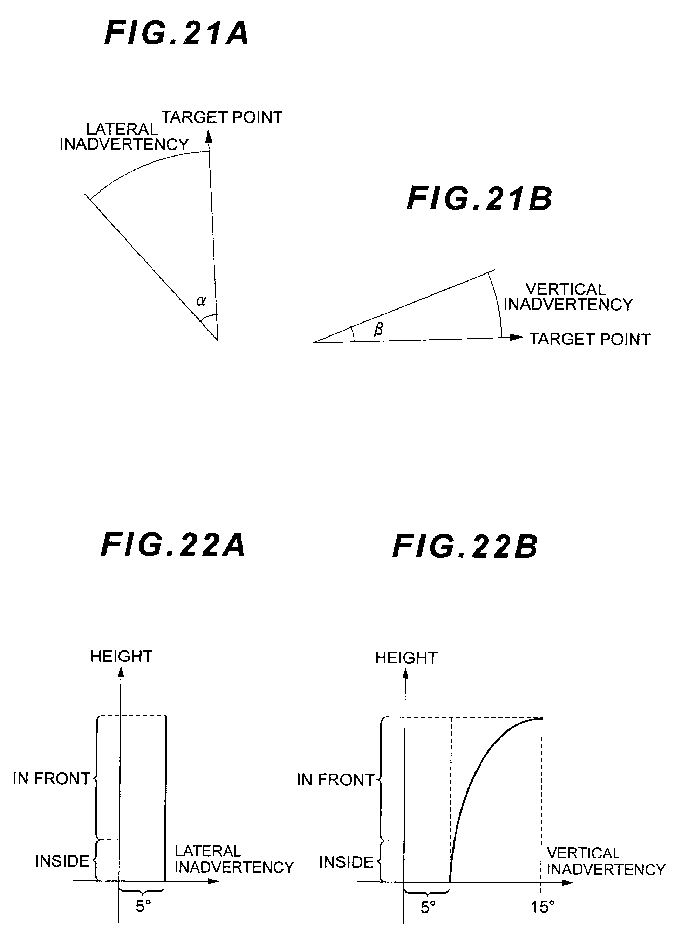

### <2> Description is given concerning lateral inadvertency and vertical inadvertency of the ball. FIG. 21 illustrates a relationship between the goal and the angle of inadvertency, with 21A being a top view of lateral inadvertency and 21 B being a side view of vertical inadvertency. As shown in FIG. 21A, a fixed angle α with respect to the direction of the target position is set as a lateral inadvertency allowance angle, which allows inadvertency in the trajectory of the ball laterally with respect to the direction of the target position. Furthermore, as shown in FIG. 21B, a fixed angle β with respect to the direction (ground surface) of the target position is set as a vertical inadvertency allowance angle, which allows inadvertency in the trajectory of the ball vertically with respect to the direction of the target position.

In the case of the soft shots described with reference to FIG. 8, a lateral inadvertency allowance range is fixed and a vertical inadvertency allowance range is set larger for greater shooting heights, that is, for greater gauge lengths. FIG. 22 is a graph showing a relationship between inadvertency and height for soft shots, with 22A being lateral inadvertency and 22B being vertical inadvertency.

As shown in FIG. 22A, in the case of soft shots, regardless of the height thereof (whether inside or in front), the lateral inadvertency allowance range is set to 5 degrees. For vertical inadvertency, as shown in FIG. 22B, the lateral inadvertency allowance range is set larger for greater shooting heights, with the smallest value (for the smallest value of the inside) being set to five degrees and the largest value (for the largest value of the in front) being set to 15 degrees.

It should be noted regarding inadvertency in soft shots that the allowance range of inadvertency may be varied according to the characteristics or state of one's own character as described in <1> or the position of opponent characters.

For example, in the case of the highest according to the shooting accuracy of one's own character (athlete), the allowance range of inadvertency is reset to 0.8 times and in the case of the lowest, it is reset to 1.2 times.

Furthermore, according to the posture of one's own character, when the orientation of the body to the goal is zero degrees, the allowance range of inadvertency is set to 1.0 times and when the orientation of the body to the goal is 180 degrees, the allowance range of inadvertency is set to 1.5 times.

Furthermore, the allowance range of inadvertency may be changed in response to a condition of one's own character. For example, when one's own character is in a stopped condition, the allowance range of inadvertency may be reset to 1.0 times, when one's own character is moving at a medium speed, the allowance range of inadvertency may be reset to 1.1 times, and when moving at high speed, the allowance range of inadvertency may be reset to 1.2 times. In this manner, the allowance range of inadvertency can be varied as appropriate depending on the speed of the athlete.

Furthermore, the allowance range of inadvertency may be changed depending on the position of an opponent character. For example, when the opponent character (defender) is present in a position 5 m from one's own character, the allowance range of inadvertency may be reset to 1.0 times and when the opponent character (defender) is present in a position 1 m from one's own character, the allowance range of inadvertency may be reset to 1.2 times.

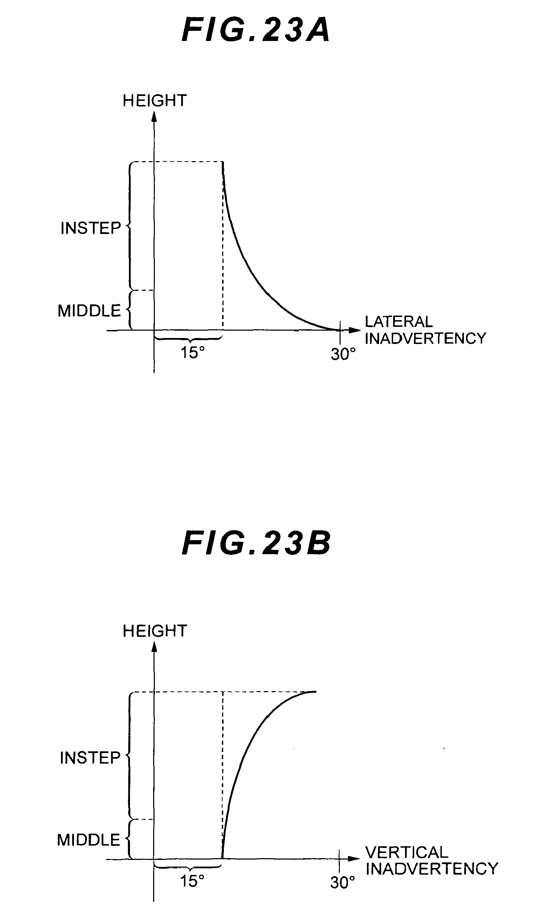

In the case of the strong shots described with reference to FIG. 8, the lateral inadvertency allowance range is set larger for lower shooting heights, that is, for shorter gauge lengths. Furthermore, the vertical inadvertency allowance range is set larger for greater shooting heights, that is, for longer gauge lengths. FIG. 23 is a graph showing a relationship between inadvertency and height for strong shots, with 23A being lateral inadvertency and 23B being vertical inadvertency.

As shown in FIG. 23A, in the case of strong shots, the lateral inadvertency allowance range is set larger for lower shooting heights, with the smallest value (for the highest value of the instep) being set to 15 degrees and the largest value (for middle shots) being set to 30 degrees. For vertical inadvertency, as shown in FIG. 23B, the vertical inadvertency allowance range is set larger for greater shooting heights, with the smallest value (for the smallest value of the middle shot) being set to 15 degrees and the largest value (for the highest value of the instep) being set to 30 degrees.

It should be noted regarding inadvertency in strong shots that the allowance range of inadvertency may be varied according to the characteristics or condition of one's own character as described in <1> or the position of opponent characters.

For example, in the case of the highest according to the shooting accuracy of one's own character (athlete), the allowance range of inadvertency is reset to 0.8 times and in the case of the lowest, it is reset to 1.2 times.

Furthermore, according to the posture of one's own character, when the orientation of the body to the goal is zero degrees, the allowance range of inadvertency is set to 1.0 times and when the orientation of the body to the goal is 180 degrees, the allowance range of inadvertency is set to 1.5 times.

Furthermore, the allowance range of inadvertency may be changed in response to a condition of one's own character. For example, when one's own character is in a stopped condition, the allowance range of inadvertency may be reset to 1.0 times, when one's own character is moving at a medium speed, the allowance range of inadvertency may be reset to 1.2 times, and when moving at high speed, the allowance range of inadvertency may be reset to 1.5 times. In this manner, the allowance range of inadvertency can be varied as appropriate depending on the speed of the athlete.

Furthermore, the allowance range of inadvertency may be changed depending on the position of an opponent character. For example, when the opponent character (defender) is present in a position 5 m from one's own character, the allowance range of inadvertency may be reset to 1.0 times and when the opponent character (defender) is present in a position 1 m from one's own character, the allowance range of inadvertency may be reset to 1.2 times.

In this manner, in the present embodiment, the options for types of ball manipulation can be increased by the length of pressing the key and the regulation of that pressing, and moreover target points (reference target point and first target point) can be set using the direction keys, which enables enjoyment of a more realistic game. Furthermore, this also enables enjoyment of maneuvering against the opponent characters.

Further still, with the present embodiment, the player is prompted to judge conditions due to the addition of displacement of the target point (reference target point and first target point) and by resetting the target points (the setting of the second target point), and since better results (for example, a goal) can be achieved by operating in response to this, a more realistic game can be enjoyed and the thrill of the game can be increased.

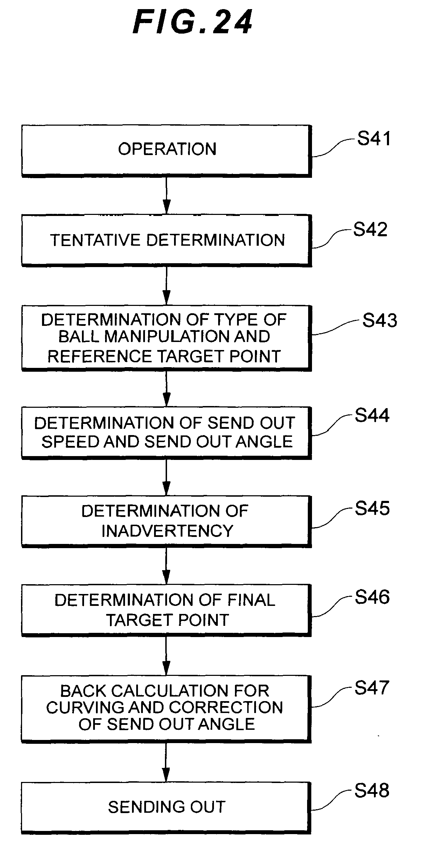

FIG. 24 shows a shot processing flow, which summarizes the above description.

As shown in FIG. 24, a tentative determination is carried out (step S42) in response to operation (step S41) by the game player. This tentative determination is a rough determination of the shot. After this, a determination is made (step S43) of the type of ball manipulation and target point described in S1 to S13 of FIG. 2 and (1) to (3), and based on this result a determination is made (step S44) of the initial velocity of kicking and the angle of kicking. Following this, a determination of inadvertency is carried out (step S45) as described with reference to <1> and <2>. A determination is made (step S46) of the final target point (send out point) according to the determination of inadvertency, which is followed by correction performed (step S47) on the back calculation for curving and send out angle as necessary, and then the send out is performed (step S48).

It should be noted that for the present embodiment, description was given presupposing mainly shooting (kicking toward the goal), but the present invention is also applicable to ordinary passing (kicking to a teammate character).

Furthermore, pressing (pressure sensitivity) of the key was employed in the present embodiment, but in order to support controllers whose pressure sensitivity portion is damaged or cannot measure pressure sensitivity, an option may be provided for setting the strength and height of a shot by pressing two times (for example, the first gauge position and the second gauge position).

## Claims

1. A program for executing on a computer a process of a ball game in which a ball possessed by a character in a virtual space is sent out based on an operation signal from operation means for operating by an operator moving an operation device,
the program causing the computer to execute:
a process of determining whether or not the character is in possession of the ball;
a process of determining whether or not an operation signal is received from the operation means indicating for the ball in possession to be released, when the character is in possession of the ball;
a process of measuring a time in which the operation signal is being received;
a process of detecting pressure that is applied to the operation means by movement of the operation device and that continuously changes; and
a process of setting a course on which the ball sent out by the character in the virtual space is to move according to a determination of whether or not the time is above a specified value and a determination of whether or not the pressure is not less than a specified value.

2. The program according to claim 1, causing the computer to execute a process in which a largest value of pressure is detected in a prescribed period in which the operation signal is received and according to a determination of whether or not the largest value of pressure is not less than a specified value,
the process executing setting a course on which the ball sent out by the character in the virtual space is to move.

3. The program according to claim 1, causing the computer to execute a process of identifying a largest value of pressure in a period from a pressure sensitivity check commence time, which is a fixed period after commencement of reception of the operation signal, until a pressure sensitivity check completion time after a predetermined period, and executing setting a course on which the ball sent out by the character in the virtual space is to move according to a determination of whether or not the largest value of pressure is not less than a specified value.

4. The program according to claim 1, causing the computer to execute a process in which strength of force level, by which the ball in the virtual space is to be sent out, is determined according to a determination of whether or not the pressure is above a specified value, and a height level of a height of the ball in respect of a reference plane in the virtual space is determined according to a determination of whether or not the time is above a specified value.

5. A program for executing on a computer a process of a ball game in which a ball possessed by a character in a virtual space is sent out based on an operation signal from operation means for operating by an operator moving an operation device,
the program causing the computer to execute:
a process of determining whether or not the character is in possession of the ball;
a process of determining whether or not an operation signal is received from the operation means indicating for the ball in possession to be released, when the character is in possession of the ball;
a process of determining whether or not an operation signal is received from the operation means indicating a lateral direction using as a reference a direction of straight advance from a position at which the ball has been sent out;
a process of measuring a time in which the operation signal is being received;
a process of detecting pressure that is applied to the operation means by movement of the operation device and that continuously changes; and
a process of setting a course on which the ball sent out by the character in the virtual space is to move according to a determination of whether or not the time is not less than a specified value, a determination of whether or not the pressure is not less than a specified value, and a direction that is indicated.

6. The program according to claim 5, causing the computer to execute a process in which
a strength of force level, by which the ball in the virtual space is to be sent out, is determined according to a determination of whether or not the pressure is not less than a specified value;
a height level of a height of the ball in respect of a reference plane in the virtual space is determined according to a determination of whether or not the time is not less than a specified value; and
a lateral direction of a position to be reached by the ball sent out in the virtual space is determined according to a direction indicated by the operation means.

7. A program for executing on a computer a process of a ball game in which a ball possessed by a character in a virtual space is sent out based on an operation signal from operation means for operating by an operator moving an operation device,
the program causing the computer to execute:
a process of determining whether or not the character is in possession of the ball;
a process of determining whether or not an operation signal is received from the operation means indicating for the ball in possession to be released, when the character is in possession of the ball;
a process of determining whether or not an operation signal is received from the operation means indicating a lateral direction using as a reference a direction of straight advance from a position at which the ball has been sent out;
a process of measuring a time in which the operation signal is being received,
a process of detecting pressure that is applied to the operation means by movement of the operation device and that continuously changes;
a process of setting a course for the ball to move on and a target position to be reached by the ball sent out by the character in the virtual space according to a determination of whether or not the time is not less than a specified value, a determination of whether or not the pressure is not less than a specified value, and a direction that is indicated; and
a process of setting displacement in the course for the ball to move on or the target position to be reached by the ball.

8. The program according to claim 7, causing the computer to execute a proves in which:
a strength of force level, by which the ball in the virtual space is to be sent out, is determined according to a determination of whether or not the pressure is not less than a specified value;
a height level of a target position to which the ball in the virtual space is to reach is determined according to a determination of whether or not the time is not less than a specified value; and
a displacement in the course for the ball to move on or the target position to be reached by the ball is set in response to the strength of force level by which the ball is to be sent out or the height level of a target position for the ball.

9. The program according to claim 7, causing the computer to execute a process of setting a displacement in the course for the ball to move on or a displacement in the target position in response to a parameter that establishes a characteristic or state of the character or a position of an opponent character in the virtual space.

10. A storage medium on which the program according to any one of claims 1 to 9 is recorded.

11. A game device comprising a memory on which a game program is recorded, operation means operated by a game player, and control means for executing the game program, which is recorded on the memory, based on an operation signal from the operation means,
wherein the control means executes the program according to any one of claims 1 to 9.
